# EUROPEAN PATENT APPLICATION

(11) **EP 4 542 282 A1**
(43) Date of publication of application: **23.04.2025**
(21) Application number: 24202286.1
(22) Date of filing: 24.09.2024
(51) Int. Cl.: G02B 27/00, G02B 27/01

(54) **HEAD-MOUNTED DEVICE WITH DOUBLE VISION COMPENSATION AND VERGENCE COMFORT IMPROVEMENT**

(30) Priority: 16.10.2023 US 202363590552 P; 11.06.2024 US 202418740287
(71) Applicant: Apple Inc., Cupertino, CA 95014 (US)
(72) Inventor: WEBEL, Sabine, Cupertino, CA 95014 (US); GOSCH, Christian W., Cupertino, CA 95014 (US); SHOLAPUR, Ritesh Gangadhar, Cupertino, CA 95014 (US)
(74) Representative: Lang, Johannes

(57) **Abstract**

A method of operating an electronic device to mitigate double vision is provided. The method can include using front-facing cameras to acquire passthrough content, using a graphics renderer to generate virtual content, mitigating double vision or improving vergence comfort by modifying at least the passthrough content, merging the passthrough content with the virtual content, and displaying the merged content. The passthrough content can be modified by selectively shifting or transforming left eye passthrough content or right eye passthrough content. The virtual content can be rendered based on a similar type of modification applied to the passthrough content. The virtual content can also be modified by selectively shifting or transforming left eye virtual content or right eye virtual content.

## Description

This application claims priority to U.S. Patent Application No. 18/740,287, filed June 11, 2024, and U.S. Provisional Patent Application No. 63/590,552, filed October 16, 2023, each of which are hereby incorporated by reference herein in their entireties.

### Field

This relates generally to electronic devices, and, more particularly, to electronic devices such as head-mounted devices.

### Background

Electronic devices such as head-mounted devices may have cameras for capturing a video feed of an external scene, a graphics rendering unit for generating virtual content, and one or more displays for presenting the captured video feed of the scene and/or the generated virtual content to a user.

It can be challenging to design a head-mounted device for user's who wear prescription glasses. Most standard eyeglass prescriptions, including those that require prism correction, can be accommodated for using additional clip-on lenses in front of the displays. Prism correction is a specific type of eyeglass prescription that helps people with double vision by aligning the images seen by both eyes. Double vision occurs when the eyes do not work together properly, causing them to see two separate images of a single object. Prism correction can also be used to provide improved vergence comfort, even for users without double vision. The use of clip-on lenses, however, can be overly bulky and can degrade the accuracy and limit the range of eye tracking sensors in the head-mounted devices.

### Summary

An electronic device such as a head-mounted device may include a graphics rendering unit for generating virtual content and one or more displays configured to output the computer-generated virtual content. The electronic device can optionally include one or more cameras configured to capture a video feed of the real-world environment facing the cameras. The captured video feed, sometimes referred to as a passthrough feed or passthrough content can optionally be presented on the one or more displays and/or merged with the computer-generated virtual content prior to be being displayed.

An aspect of the disclosure provides a method of operating an electronic device such as a head-mounted device, the method including acquiring passthrough content with one or more image sensors, generating virtual content with a graphics rendering subsystem, mitigating double vision or improving vergence comfort by modifying the passthrough content to produce corresponding modified passthrough content, merging the modified passthrough content with the virtual content to produce corresponding merged content, and presenting the merged content with one or more displays. The passthrough content can be modified by cropping or transforming either left eye passthrough content or right eye passthrough content at an image signal processor. The passthrough content can be modified by warping either the left eye passthrough content or the right eye passthrough content to apply a lateral shift in the field of view or to apply a transformation in the point of view.

The graphics rendering subsystem can be configured to generate the virtual content based on a first virtual camera that imposes constraints defining a first point of view from which left eye virtual content is being rendered at the graphics rendering subsystem and a second virtual camera that imposes constraints defining a second point of view from which the right eye virtual content is being rendered at the graphics rendering subsystem. The first virtual camera can have a first view frustum, whereas the second virtual camera can have a second view frustum. The graphics rendering subsystem can be configured to shift either the left eye virtual content or the right eye virtual content on the one or more displays by adjusting an angle limit (boundary) for a corresponding one of the first and second view frustums. The graphics rendering subsystem can be configured to laterally shift a selected one of the first and second view frustums along a common projection plane. The graphics rendering subsystem can be configured to transform a selected one of the first virtual camera and the second virtual camera. The virtual content can be modified by selectively warping the left eye virtual content or the right eye virtual content to apply a lateral shift in the field of view or to apply a transformation in the point of view.

An aspect of the disclosure provides a method of operating a device that includes acquiring passthrough content with one or more image sensors, generating virtual content with a graphics rendering subsystem, obtaining prism prescription values for correcting double vision or improving vergence comfort, computing compensation parameters based on the prism prescription values, modifying the passthrough content based on the compensation parameters, and displaying a blended version of the modified passthrough content and the virtual content. The method can further include modifying the passthrough content by shifting or transforming left eye passthrough content or right eye passthrough content. The method can further include modifying the virtual content based on the compensation parameters. The method can further include providing a user with an opportunity to adjust the compensation parameters to minimize double vision or improve vergence comfort. The method can further include reading a scannable code and obtaining the prism prescription values from the scannable code.

An aspect of the disclosure provides a method of operating an electronic device that includes acquiring passthrough content, generating virtual content, displaying a stimulus point, monitoring a point of gaze to estimate a misalignment between the point of gaze and an expected point of gaze while the stimulus point is being displayed, computing compensation parameters based on the estimated misalignment, modifying the passthrough content based on the compensation parameters, and displaying a blended version of the modified passthrough content and the virtual content. The method can further include estimating the misalignment by obtaining a plurality of gaze data points, removing one or more outliers from the plurality of gaze data points, and averaging the plurality of gaze data points.

An aspect of the disclosure provides a method that includes generating virtual content having left eye content and right eye content with a graphics rendering subsystem that is configured to generate the virtual content based on a first virtual camera that imposes constraints defining a first point of view from which the left eye content is being rendered at the graphics rendering subsystem and a second virtual camera that imposes constraints defining a second point of view from which the right eye content is being rendered at the graphics rendering subsystem, mitigating double vision or improving vergence comfort by modifying a selected one of the left eye content and the right eye content to produce modified virtual content, and displaying the modified content.

### Brief Description of the Drawings

FIG. 1 is a top view of an illustrative head-mounted device in accordance with some embodiments.
FIG. 2 is a schematic diagram of an illustrative electronic device in accordance with some embodiments.
FIG. 3 is a diagram showing illustrative hardware and/or software subsystems within an electronic device configured to perform double vision compensation in accordance with some embodiments.
FIG. 4 is a diagram illustrating shifting of the projected content to be displayed to achieve double vision correction in accordance with some embodiments.
FIG. 5 is a diagram illustrating camera perspective transform to achieve double vision correction in accordance with some embodiments.
FIG. 6 is a flow chart of illustrative steps for operating an electronic device of the type shown in connection with FIGS. 1-5 in accordance with some embodiments.
FIG. 7 is a flow chart of illustrative steps for generating double vision compensation parameters from eyeglass prescription values in accordance with some embodiments.
FIG. 8 is a flow chart of illustrative steps for generating double vision compensation parameters based on measured gaze data in accordance with some embodiments.

### Detailed Description

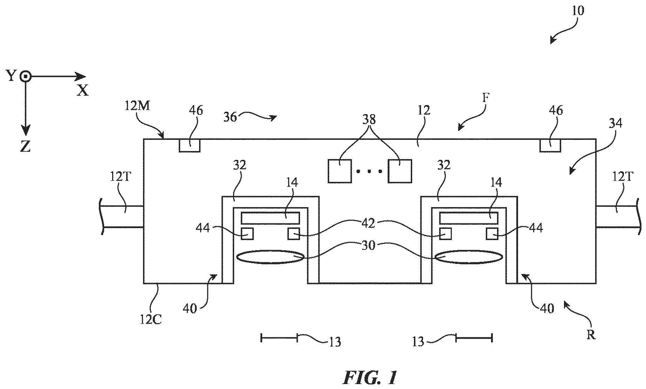

A top view of an illustrative head-mounted device is shown in FIG. 1. As shown in FIG. 1, head-mounted devices such as electronic device 10 may have head-mounted support structures such as housing 12. Housing 12 may include portions (e.g., head-mounted support structures 12T) to allow device 10 to be worn on a user's head. Support structures 12T may be formed from fabric, polymer, metal, and/or other material. Support structures 12T may form a strap or other head-mounted support structures to help support device 10 on a user's head. A main support structure (e.g., a head-mounted housing such as main housing portion 12M) of housing 12 may support electronic components such as displays 14.

Main housing portion 12M may include housing structures formed from metal, polymer, glass, ceramic, and/or other material. For example, housing portion 12M may have housing walls on front face F and housing walls on adjacent top, bottom, left, and right side faces that are formed from rigid polymer or other rigid support structures, and these rigid walls may optionally be covered with electrical components, fabric, leather, or other soft materials, etc. Housing portion 12M may also have internal support structures such as a frame (chassis) and/or structures that perform multiple functions such as controlling airflow and dissipating heat while providing structural support.

The walls of housing portion 12M may enclose internal components 38 in interior region 34 of device 10 and may separate interior region 34 from the environment surrounding device 10 (exterior region 36). Internal components 38 may include integrated circuits, actuators, batteries, sensors, and/or other circuits and structures for device 10. Housing 12 may be configured to be worn on a head of a user and may form glasses, spectacles, a hat, a mask, a helmet, goggles, and/or other head-mounted device. Configurations in which housing 12 forms goggles may sometimes be described herein as an example.

Front face F of housing 12 may face outwardly away from a user's head and face. Opposing rear face R of housing 12 may face the user. Portions of housing 12 (e.g., portions of main housing 12M) on rear face R may form a cover such as cover 12C (sometimes referred to as a curtain). The presence of cover 12C on rear face R may help hide internal housing structures, internal components 38, and other structures in interior region 34 from view by a user.

Device 10 may have one or more cameras such as cameras 46 of FIG. 1. Cameras 46 that are mounted on front face F and that face outwardly (towards the front of device 10 and away from the user) may sometimes be referred to herein as forward-facing or front-facing cameras. Cameras 46 may capture visual odometry information, image information that is processed to locate objects in the user's field of view (e.g., so that virtual content can be registered appropriately relative to real-world objects), image content that is displayed in real time for a user of device 10, and/or other suitable image data. For example, forward-facing (front-facing) cameras may allow device 10 to monitor movement of the device 10 relative to the environment surrounding device 10 (e.g., the cameras may be used in forming a visual odometry system or part of a visual inertial odometry system). Forward-facing cameras may also be used to capture images of the environment that are displayed to a user of the device 10. If desired, images from multiple forward-facing cameras may be merged with each other and/or forward-facing camera content can be merged with computer-generated content for a user.

Device 10 may have any suitable number of cameras 46. For example, device 10 may have K cameras, where the value of K is at least one, at least two, at least four, at least six, at least eight, at least ten, at least 12, less than 20, less than 14, less than 12, less than 10, 4-10, or other suitable value. Cameras 46 may be sensitive at infrared wavelengths (e.g., cameras 46 may be infrared cameras), may be sensitive at visible wavelengths (e.g., cameras 46 may be visible cameras), and/or cameras 46 may be sensitive at other wavelengths. If desired, cameras 46 may be sensitive at both visible and infrared wavelengths.

Device 10 may have left and right optical modules 40. Optical modules 40 support electrical and optical components such as light-emitting components and lenses and may therefore sometimes be referred to as optical assemblies, optical systems, optical component support structures, lens and display support structures, electrical component support structures, or housing structures. Each optical module may include a respective display 14, lens 30, and support structure such as support structure 32. Support structure 32, which may sometimes be referred to as a lens support structure, optical component support structure, optical module support structure, or optical module portion, or lens barrel, may include hollow cylindrical structures with open ends or other supporting structures to house displays 14 and lenses 30. Support structures 32 may, for example, include a left lens barrel that supports a left display 14 and left lens 30 and a right lens barrel that supports a right display 14 and right lens 30.

Displays 14 may include arrays of pixels or other display devices to produce images. Displays 14 may, for example, include organic light-emitting diode pixels formed on substrates with thin-film circuitry and/or formed on semiconductor substrates, pixels formed from crystalline semiconductor dies, liquid crystal display pixels, scanning display devices, and/or other display devices for producing images.

Lenses 30 may include one or more lens elements for providing image light from displays 14 to respective eyes boxes 13. Lenses may be implemented using refractive glass lens elements, using mirror lens structures (catadioptric lenses), using Fresnel lenses, using holographic lenses, and/or other lens systems.

When a user's eyes are located in eye boxes 13, displays (display panels) 14 operate together to form a display for device 10 (e.g., the images provided by respective left and right optical modules 40 may be viewed by the user's eyes in eye boxes 13 so that a stereoscopic image is created for the user). The left image from the left optical module fuses with the right image from a right optical module while the display is viewed by the user.

It may be desirable to monitor the user's eyes while the user's eyes are located in eye boxes 13. For example, it may be desirable to use a camera to capture images of the user's irises (or other portions of the user's eyes) for user authentication. It may also be desirable to monitor the direction of the user's gaze. Gaze tracking information may be used as a form of user input and/or may be used to determine where, within an image, image content resolution should be locally enhanced in a foveated imaging system. To ensure that device 10 can capture satisfactory eye images while a user's eyes are located in eye boxes 13, each optical module 40 may be provided with a camera such as camera 42 and one or more light sources such as light-emitting diodes 44 or other light-emitting devices such as lasers, lamps, etc. Cameras 42 and light-emitting diodes 44 may operate at any suitable wavelengths (visible, infrared, and/or ultraviolet). As an example, diodes 44 may emit infrared light that is invisible (or nearly invisible) to the user. This allows eye monitoring operations to be performed continuously without interfering with the user's ability to view images on displays 14.

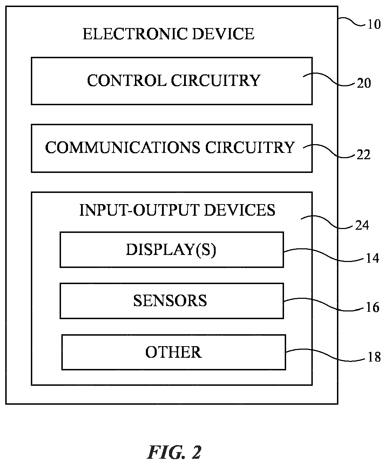

A schematic diagram of an illustrative electronic device such as a head-mounted device or other wearable device is shown in FIG. 2. Device 10 of FIG. 2 may be operated as a stand-alone device and/or the resources of device 10 may be used to communicate with external electronic equipment. As an example, communications circuitry in device 10 may be used to transmit user input information, sensor information, and/or other information to external electronic devices (e.g., wirelessly or via wired connections). Each of these external devices may include components of the type shown by device 10 of FIG. 2.

As shown in FIG. 2, a head-mounted device such as device 10 may include control circuitry 20. Control circuitry 20 may include storage and processing circuitry for supporting the operation of device 10. The storage and processing circuitry may include storage such as nonvolatile memory (e.g., flash memory or other electrically-programmable-read-only memory configured to form a solid state drive), volatile memory (e.g., static or dynamic random-access-memory), etc. One or more processors in control circuitry 20 may be used to gather input from sensors and other input devices and may be used to control output devices. The processing circuitry may be based on one or more processors such as microprocessors, microcontrollers, digital signal processors, baseband processors and other wireless communications circuits, power management units, audio chips, application specific integrated circuits, etc. During operation, control circuitry 20 may use display(s) 14 and other output devices in providing a user with visual output and other output. Control circuitry 20 may be configured to perform operations in device 10 using hardware (e.g., dedicated hardware or circuitry), firmware, and/or software. Software code for performing operations in device 10 may be stored on storage circuitry (e.g., non-transitory (tangible) computer readable storage media that stores the software code). The software code may sometimes be referred to as program instructions, software, data, instructions, or code. The stored software code may be executed by the processing circuitry within circuitry 20.

To support communications between device 10 and external equipment, control circuitry 20 may communicate using communications circuitry 22. Circuitry 22 may include antennas, radio-frequency transceiver circuitry, and other wireless communications circuitry and/or wired communications circuitry. Circuitry 22, which may sometimes be referred to as control circuitry and/or control and communications circuitry, may support bidirectional wireless communications between device 10 and external equipment (e.g., a companion device such as a computer, cellular telephone, or other electronic device, an accessory such as a point device or a controller, computer stylus, or other input device, speakers or other output devices, etc.) over a wireless link.

For example, circuitry 22 may include radio-frequency transceiver circuitry such as wireless local area network transceiver circuitry configured to support communications over a wireless local area network link, near-field communications transceiver circuitry configured to support communications over a near-field communications link, cellular telephone transceiver circuitry configured to support communications over a cellular telephone link, or transceiver circuitry configured to support communications over any other suitable wired or wireless communications link. Wireless communications may, for example, be supported over a Bluetooth^{®} link, a WiFi^{®} link, a wireless link operating at a frequency between 10 GHz and 400 GHz, a 60 GHz link, or other millimeter wave link, a cellular telephone link, or other wireless communications link. Device 10 may, if desired, include power circuits for transmitting and/or receiving wired and/or wireless power and may include batteries or other energy storage devices. For example, device 10 may include a coil and rectifier to receive wireless power that is provided to circuitry in device 10.

Device 10 may include input-output devices such as devices 24. Input-output devices 24 may be used in gathering user input, in gathering information on the environment surrounding the user, and/or in providing a user with output. Devices 24 may include one or more displays such as display(s) 14. Display(s) 14 may include one or more display devices such as organic light-emitting diode display panels (panels with organic light-emitting diode pixels formed on polymer substrates or silicon substrates that contain pixel control circuitry), liquid crystal display panels, microelectromechanical systems displays (e.g., two-dimensional mirror arrays or scanning mirror display devices), display panels having pixel arrays formed from crystalline semiconductor light-emitting diode dies (sometimes referred to as microLEDs), and/or other display devices.

Sensors 16 in input-output devices 24 may include force sensors (e.g., strain gauges, capacitive force sensors, resistive force sensors, etc.), audio sensors such as microphones, touch and/or proximity sensors such as capacitive sensors such as a touch sensor that forms a button, trackpad, or other input device), and other sensors. If desired, sensors 16 may include optical sensors such as optical sensors that emit and detect light, ultrasonic sensors, optical touch sensors, optical proximity sensors, and/or other touch sensors and/or proximity sensors, monochromatic and color ambient light sensors, image sensors (e.g., cameras), fingerprint sensors, iris scanning sensors, retinal scanning sensors, and other biometric sensors, temperature sensors, sensors for measuring three-dimensional non-contact gestures ("air gestures"), pressure sensors, sensors for detecting position, orientation, and/or motion of device 10 and/or information about a pose of a user's head (e.g., accelerometers, magnetic sensors such as compass sensors, gyroscopes, and/or inertial measurement units that contain some or all of these sensors), health sensors such as blood oxygen sensors, heart rate sensors, blood flow sensors, and/or other health sensors, radio-frequency sensors, three-dimensional camera systems such as depth sensors (e.g., structured light sensors and/or depth sensors based on stereo imaging devices that capture three-dimensional images) and/or optical sensors such as self-mixing sensors and light detection and ranging (lidar) sensors that gather time-of-flight measurements (e.g., time-of-flight cameras), humidity sensors, moisture sensors, gaze tracking sensors, electromyography sensors to sense muscle activation, facial sensors, and/or other sensors. In some arrangements, device 10 may use sensors 16 and/or other input-output devices to gather user input. For example, buttons may be used to gather button press input, touch sensors overlapping displays can be used for gathering user touch screen input, touch pads may be used in gathering touch input, microphones may be used for gathering audio input (e.g., voice commands), accelerometers may be used in monitoring when a finger contacts an input surface and may therefore be used to gather finger press input, etc.

If desired, electronic device 10 may include additional components (see, e.g., other devices 18 in input-output devices 24). The additional components may include haptic output devices, actuators for moving movable housing structures, audio output devices such as speakers, light-emitting diodes for status indicators, light sources such as light-emitting diodes that illuminate portions of a housing and/or display structure, other optical output devices, and/or other circuitry for gathering input and/or providing output. Device 10 may also include a battery or other energy storage device, connector ports for supporting wired communication with ancillary equipment and for receiving wired power, and other circuitry.

Display(s) 14 can be used to present a variety of content to a user's eye. The left and right displays 14 that are used to present a fused stereoscopic image to the user's eyes when viewing through eye boxes 13 can sometimes be referred to collectively as a display 14. As an example, virtual reality (VR) content can be presented by display 14. Virtual reality content may refer to content that only includes virtual objects within a virtual reality (computer-generated) environment. As another example, mixed reality (MR) content can be presented by display 14. Mixed reality content may refer to content that includes virtual objects *and* real objects from the real-world physical environment in which device 10 is being operated. As another example, only real-world content can be presented by display 14. The real-world content may refer to images being captured by one or more front-facing cameras (see, e.g., cameras 46 in FIG. 1) and passed through as a live feed to the user. The real-world content being captured by the front-facing cameras is therefore sometimes referred to as a camera passthrough feed, a (live) video passthrough feed, or a passthrough video feed (stream).

A physical environment refers to a physical world that people can sense and/or interact with without the aid of an electronic device. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics.

A user wearing an electronic device 10 of the type described in connection with FIGS. 1 and 2 can sometimes have a medical condition known as diplopia or "double vision," which is a visual disorder that would cause a person to see two distinct images of a single object. The two distinct images can appear side-by-side, vertically stacked, or at various angles relative to each other. Users with double vision may require eyeglass prescription with prism correction. Prism correction typically involves the use of specially designed eyeglass lenses that incorporate prisms configured to adjust the way light enters the eyes in order to alleviate or eliminate double vision. Prism correction techniques thus shift the image content, as seen by the user, in a particular direction, to enable the user to fuse the two distinct images as seen by their eyes. Providing prism correction in a head-mounted device can be challenging.

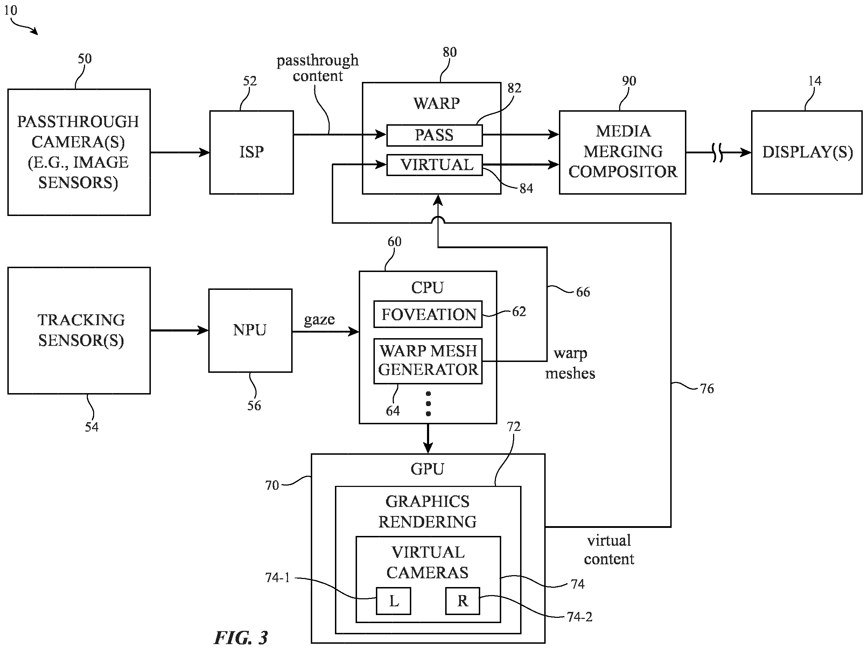

In accordance with an embodiment, head-mounted device 10 can be provided with software and/or hardware subsystems configured to perform double vision compensation/mitigation and to provide improved vergence comfort without the use of additional clip-on lenses. Such type of electronic device 10 is illustrated in FIG. 3. As shown in FIG. 3, device 10 can include one or more image sensors such as image sensors 50, an image signal processor such as image signal processor (ISP) 52, one or more tracking sensors such as tracking sensors 54, one or more processing (compute) units such as a central processing unit (CPU) 60, a neural processing unit (NPU) 56, and a graphics processing unit (GPU) 70, a warping subsystem such as warp(ing) block 80, a media merging subsystem such as media merging compositor 90, and one or more display(s) such as displays 14.

Image sensor(s) 50 may include one or more front-facing camera(s) and/or other cameras used to gather information on the external real-world environment surrounding device 10. Cameras 50 may represent one or more of front-facing cameras 46 in FIG. 1. A video feed output from cameras 50 can sometimes be referred to as a raw video feed or a live video passthrough feed or a live passthrough video stream. Front-facing cameras 50 are therefore sometimes referred to herein as passthrough cameras. Such passthrough feed output from cameras 50 can be processed by image signal processor (ISP) 52 that is configured to perform image signal processing functions that only rely on the input of the live camera feed itself. For example, ISP block 52 may be configured to perform automatic exposure for controlling an exposure setting for the passthrough feed, tone mapping, autofocus, color correction, gamma correction, shading correction, noise reduction, black level adjustment, demosaicing, image sharpening, high dynamic range (HDR) correction, color space conversion, and/or other image signal processing functions to output a corresponding processed passthrough feed (e.g., a series of processed video frames). The processed passthrough feed, sometimes referred to as passthrough content, can be presented as a live video stream to the user via one or more displays 14.

Tracking sensors 54 can include a gaze tracking subsystem, sometime referred to as a gaze tracker, that is configured to gather gaze information or point-of-gaze information. The gaze tracker may employ one or more inward facing camera(s) and/or other gaze-tracking components (e.g., eye-facing components and/or other light sources that emit beams of light so that reflections of the beams from a user's eyes may be detected) to monitor the user's eyes. One or more gaze-tracking sensor(s) 54 may face a user's eyes and may track a user's gaze. A camera in gaze-tracking subsystem 54 may determine the location of a user's eyes (e.g., the centers of the user's pupils), may determine the direction in which the user's eyes are oriented (the direction of the user's gaze), may determine the user's pupil size (e.g., so that light modulation and/or other optical parameters and/or the amount of gradualness with which one or more of these parameters is spatially adjusted and/or the area in which one or more of these optical parameters is adjusted based on the pupil size), may be used in monitoring the current focus of the lenses in the user's eyes (e.g., whether the user is focusing in the near field or far field, which may be used to assess whether a user is day dreaming or is thinking strategically or tactically), and/or other gaze information. Cameras in gaze tracker 54 may sometimes be referred to as inward-facing cameras, gaze-detection cameras, eye-tracking cameras, gaze-tracking cameras, or eye-monitoring cameras. If desired, other types of optical sensors (e.g., infrared and/or visible light-emitting diodes and light detectors, etc.) may also be used in monitoring a user's gaze.

Tracking sensors 54 can also include a face and body tracking subsystem configured to perform face tracking (e.g., to capture images of the user's jaw, mouth, etc. while the device is worn on the head of the user) and body tracking (e.g., by capturing images of the user's torso, arms, hands, legs, etc. while the device is worn on the head of user). If desired, the face and body tracking subsystem can also track a user's head pose by directly determining any movement, yaw, pitch, roll, etc. for head-mounted device 10. The yaw, roll, and pitch of the user's head may collectively define a user's head pose.

Tracking sensors 54 can further include a hands tracking subsystem, sometimes referred to as a hands tracker, configured to monitor a user's hand motion/gesture to obtain hand gestures data. For example, the hands tracker may include a camera and/or other gestures tracking components (e.g., outward facing components and/or light sources that emit beams of light so that reflections of the beams from a user's hand may be detected) to monitor the user's hand(s). One or more hands-tracking sensor(s) 54 may be directed towards a user's hands and may track the motion associated with the user's hand(s), may determine whether the user is performing a tapping or swiping motion with his/her fingertips or hand(s), may determine whether the user is performing a non-contact button press or object selection operation with his/her hand(s), may determine whether the user is performing a grabbing or gripping motion with his/her hand(s), may determine whether the user is pointing at or pinching at a given object that is presented on display 14 using his/her hand(s) or fingers, may determine whether the user is performing a waving or bumping motion with his/her hand(s), or may generally measure/monitor three-dimensional non-contact gestures ("air gestures") associated with the user's hand(s). Tracking sensors 54 operable to obtain gaze, pose, hands gesture, and other information relating to a motion of a user of device 10 are sometimes referred to collectively as "user-tracking" sensors.

The data gathered using tracking sensors 54 may optionally be processed using neural processing unit (NPU) 56, which is optimized for neural network processing operations. Neural processing unit 56 can perform neural network processing tasks much faster than CPU 60. Neural processing unit 56 may employ one or more machine learning based models to output corresponding gaze information, head pose information, hands information, and/or other information relating to the user.

The example of FIG. 3 in which front-facing cameras 50 (e.g., image sensors employed to obtain the passthrough content) and tracking sensors 54 (e.g., optical sensors employed to obtain gaze, pose, and/or other user-related data) are shown as separate independent subsystems is illustrative. In some embodiments, one or more of cameras 50 that are used to obtain the live video passthrough feed can also be employed to obtain pose information, hands information, and/or other user-related data.

The gaze information and/or other user-related information output from neural processing unit 56 can be conveyed to central processing unit (CPU) 60. Most software applications running on device 10 employ CPU 60 in one way or another during normal operation. CPU 60 is sometimes referred to as an applications processor. Unlike the NPU 56, which is optimized for artificial neural network computations, and the GPU 70, which is optimized for graphics rendering computations, CPU 60 may be configured to handle general purpose tasks, including but not limited to running a main operating system (OS) for device 10, executing web browsing applications, social media applications, messaging applications, media streaming applications, and mapping and navigation applications, and supporting wireless communications, security and encryption functions, and power management functions, just to name a few.

In the example of FIG. 3, a foveation subsystem such as dynamic foveation block 62 can be executed on CPU 60. Foveation block 62 is a component configured to optimize a display rendering process by allocating more computational resources to a region of the display aligned with the user's point of gaze while reducing the detail in the peripheral regions not aligned with the user's point of gaze (e.g., by locally enhancing the image resolution of the video feed only in the area of the user's gaze). Since the area or point of gaze can vary over time, foveation can be performed dynamically at a rate sufficient to keep up with the drift of the user's gaze. Foveation block 62 can, for example, be configured to generate a foveation curve and a desired display pixel grouping based on the received gaze information for locally enhancing the image resolution of the video feed in the area of the user's gaze.

CPU 60 can further include a software or hardware subsystem such as block 64 configured to generate one or more warp meshes based on the received gaze information and/or other user-related information. Block 64 is therefore sometimes referred to as a warp mesh generation block or a warp mesh generator. The warp mesh generated by block 64 may refer to and be defined herein as a grid or mesh of interconnected points (vertices) that can be overlaid on top of an image. Each vertex in the warp mesh can be independently adjusted to apply distortions, deformations, warping, morphing, rippling, and/or other transformations or visual effects to the underlying image. The density of vertices in a warp mesh can vary depending on the level of detail employed by the particular transformation at hand. Each vertex in a warp mesh can have, along with its positional coordinates, associated warp parameters, which can include texture coordinates, blending weights, and/or other values that might affect how each vertex contributes to the final warped image. In the context of head-mounted device 10, the warp meshes output by block 64 can be used for lens distortion correction, point-of-view correction (POVC), and/or other adjustments to the displayed passthrough feed to create a more natural, pleasing, comfortable, and immersive viewing experience. In general, the warp meshes can be generated based on the gaze data (e.g., the warp meshes can change based on the user's gaze, head pose, and/or other movements). The warp meshes can also be adjusted, based on the foveation curves, so that certain areas of an image is rendered with lower detail to conserve computational resources.

Unlike the CPU 60 and NPU 56, the graphics processing unit (GPU) 70 is optimized for graphics processing or graphics rendering operations, as its name suggests. Graphics processing unit 70 may include highly parallelized processing cores configured to handle a wide range of computationally intensive tasks. A graphics rending subsystem such as graphics rendering engine 72 can be implemented on GPU 70. Graphics rendering engine 72, sometimes referred to as a graphics renderer or a graphics rendering pipeline, can be configured to render or generate virtual content (e.g., virtual reality content, augmented reality content, mixed reality content, or extended reality content) or may be used to carry out other graphics processing functions. The virtual (computer-generated) content output from the graphics rendering engine 72 can optionally be foveated based on the foveation information output from dynamic foveation block 62 (e.g., subsystem 72 can render foveated virtual content).

Graphics renderer 72 can synthesize photorealistic or non-photorealistic images from one or more 2-dimensional or 3-dimensional model(s) defined in a scene file that contains information on how to simulate a variety of features such as information on shading (e.g., how color and brightness of a surface varies with lighting), shadows (e.g., how to cast shadows across an object), texture mapping (e.g., how to apply detail to surfaces), reflection, transparency or opacity (e.g., how light is transmitted through a solid object), translucency (e.g., how light is scattered through a solid object), refraction and diffraction, depth of field (e.g., how certain objects can appear out of focus when outside the depth of field), motion blur (e.g., how certain objects can appear blurry due to fast motion), and/or other visible features relating to the lighting or physical characteristics of objects in a scene. Graphics renderer 72 can apply rendering algorithms such as rasterization, ray casting, ray tracing, radiosity, or other graphics processing algorithms.

In the embodiment of FIG. 3, graphics rendering block 72 can have associated rendering parameters sometimes referred to and defined herein as "virtual cameras." The virtual cameras 74 associated with the graphics rendering pipeline may represent constraints imposed on the graphics rendering operations that define the perspective or point of view for rendering the virtual content for the user's eyes. For example, the virtual cameras 74 can include: (1) a first virtual (render) camera 74-1 that determines the perspective from which the virtual content generated for the *left* eye (sometimes referred to and defined herein as "left eye content" or left eye virtual content) will be rendered, and (2) a second virtual (render) camera 74-2 that determines the perspective from which the virtual content generated for the *right* eye (sometimes referred to and defined herein as "right eye content" or right eye virtual content) will be rendered. The left virtual camera 74-1 is therefore sometimes referred to herein as a first point of view (POV) or perspective rendering parameter, whereas the right virtual camera 74-2 is sometimes referred to herein as a second POV or perspective rendering parameter. The virtual rendering cameras are therefore sometimes referred to collectively as view rendering parameters or constraints.

The image warping operations can be performed at content warping subsystem 80, sometimes referred to as a warp(ing) block. Subsystem 80 may represent a software or hardware component configured to receive the warp meshes output from warp mesh generation block 64 via path 66 and to warp the passthrough content and the virtual content (e.g., to apply distortions, deformations, warping, morphing, rippling, and/or other transformations or visual effects to the underlying images). In the example of FIG. 3, warping block 80 may include a first subcomponent 82 configured to warp the passthrough content and a second subcomponent 84 configured to separately warp the virtual content. In particular, the first warping subcomponent 82 may receive the passthrough content from the output of ISP 52 and warp the passthrough content based on the received warp meshes and/or other information relevant to the warping of the live passthrough feed to generate corresponding warped passthrough content. The second warping subcomponent 84 may receive the rendered virtual content from the output of GPU 70 and warp the virtual content based on the received warp meshes and/or other information relevant to the warping of the computer-generated content to generate corresponding warped virtual content.

Media merging compositor 90 may receive the warped passthrough content and the warped virtual content from warping subsystem 80 and may overlay, blend, or otherwise combine one or more portions of the warped virtual content with the warped passthrough content to obtain corresponding *merged* or *blended* video content. The merged video content output from the media merging compositor 90 can then be presented on display(s) 14 to be viewed by the user of device 10.

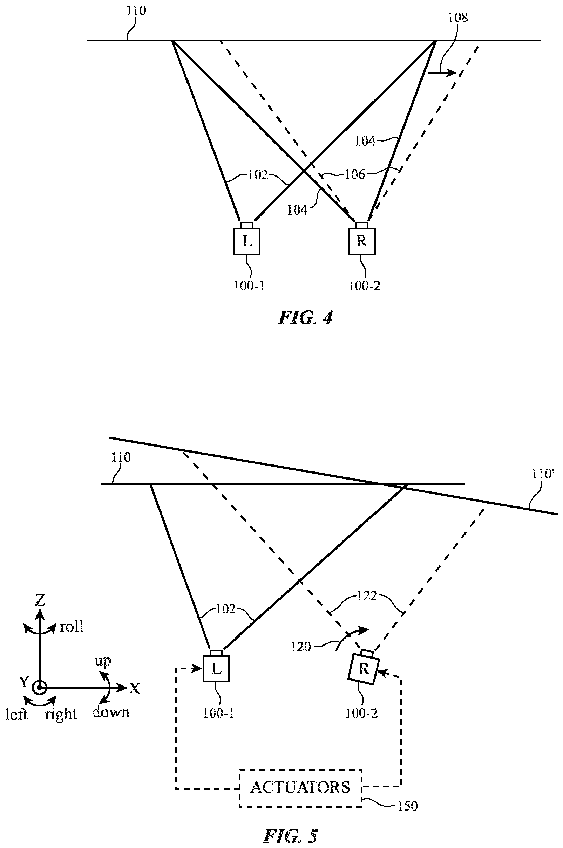

Device 10 of the type described in connection with FIGS. 1-3 can be configured to provide double vision correction, sometimes referred to as double vision compensation or double vision mitigation. The double vision phenomenon is often due to the misalignment of the user's eyes, such as when the left and right eyes do not point in the same direction. In accordance with an embodiment, double vision can be mitigated by shifting the projected content for one of the virtual cameras. This approach is illustrated in a top (bird's eye) view of FIG. 4. As shown in FIG. 4, a first virtual camera 100-1 can have a first view frustum denoted by lines 102, whereas a second virtual camera 100-2 can have a second view frustum denoted by lines 104. Virtual cameras 100-1 and 100-2 may represent the left and right virtual (rendering) cameras 74-1 and 74-2 described in connection with FIG. 3. A "view frustum" may refer to and be defined herein as a geometric shape that represents the volume of space that a particular camera can capture in a three-dimensional (3D) scene (e.g., the view frustum may define a field of view for each virtual camera). The view frustum can have a truncated pyramid shape that is defined by six planes: a near plane, a far plane, a top plane joining the upper edges of the near and far planes, a bottom plane joining the lower edges of the near and far planes, a left plane joining the left edges of the near and far planes, and a right plane joining the right edges of the near and far planes. The *near* plane of the view frustum may be coplanar with a projection plane 110 shown in the top view of FIG. 4. The projection plane 110 may thus represent the closest plane to the camera within the view frustum and is the plane on which the 3D scene is projected to create the final two-dimensional (2D) image.

In the example of FIG. 4, the first view frustum 102 of virtual camera 100-1 and the second view frustum 104 of virtual camera 100-2 may coincide with one another, as shown by the alignment of the two view frustums along projection plane 110. Such perfect alignment of the left and right view frustums, however, may not correspond to the actual misalignment between the eyes of a user with diplopia or other medical condition(s) that might cause the user to experience double vision. To help mimic the misalignment or divergence between the eyes of such a user, the projected content for one of the virtual cameras can be shifted as perceived by one of the user's eyes (e.g., to shift the location of the rendered virtual content within the user's field of view on the display). This lateral shifting of the rendered content can be achieved by modifying the view frustum limits (e.g., by modifying a view frustum's angle limits or boundaries *without* changing the location of the virtual cameras). This type of shift is illustrated in FIG. 4 (as indicated by arrow 108) so that the view frustum of the second virtual camera 100-2 as denoted by dotted lines 106 is now offset with respect to the view frustum of the first virtual camera 100-1. This perceived shift in content that is achieved by adjusting the view frustum limit angles is exemplary. Alternatively, the view frustum of one of the virtual cameras can be laterally shifted (e.g., by laterally shifting the *location* of one of the virtual cameras) to shift the projected content on the display.

The example of FIG. 4 in which the projected/rendered content of virtual camera 100-2 is shifted laterally to the right along the projection plane 110 is merely illustrative. In general, the rendered content of virtual camera 100-1 can be laterally shifted in any direction along projection plane 110 and/or the rendered content of virtual camera 100-2 can be laterally shifted in any direction along projection plane 110. If desired, the projected content of both virtual cameras 100-1 and 100-2 can optionally be shifted. This technique in which the content of one of the virtual cameras is shifted *without* deviating from the projection (near) plane is sometimes referred to as a *planar* projection shift. Generating virtual content by shifting or otherwise modifying the content of one or more of the virtual rendering cameras can help mitigate double vision for a user viewing the virtual content.

The example of FIG. 4 relating to shifting the projected content of the virtual cameras can be employed to correct double vision associated with the *virtual* content generated by the graphics rendering pipeline. Similar shifting in the field of view can also be employed to mitigate double vision for the read-world *passthrough* content. For example, the passthrough content can be laterally shifted via selective cropping of left and right images at the image signal processor 52. The passthrough content can collectively refer to a series of passthrough images presented to the left eye (sometimes referred to and defined herein as "left eye content" or left eye passthrough content) and a series of passthrough images presented to the right eye (sometimes referred to and defined herein as "right eye content" or right eye passthrough content). These passthrough images intended for the left and right eyes can be captured using multiple separate front-facing cameras 50 (see FIG. 3) or using one front-facing camera 50. The left passthrough images and/or the right passthrough images can be individually cropped to achieve the desired planar projection (or field of view) shifting. This assumes that the pre-cropped images have a sufficient field of view to accommodate an amount of cropping for aligning the field of view of the left passthrough images and the field of view of the right passthrough images.

The example of FIG. 4 relating to shifting the projected content along a projection plane or shifting the field of view to perform double vision compensation is illustrative. FIG. 5 is a bird's eye view showing another embodiment in which double vision can be mitigated by transforming the point of view (POV) of one or more of the virtual cameras. The terms "point of view" (POV), "perspective," and "pose" relating to a camera are sometimes used interchangeably herein. As shown in FIG. 5, the first virtual camera 100-1 can have a first view frustum denoted by lines 102, whereas the second virtual camera 100-2 can have a second view frustum denoted by dotted lines 122. Virtual cameras 100-1 and 100-2 may represent the left and right virtual (rendering) cameras 74-1 and 74-2 described in connection with FIG. 3.

The second view frustum 122 may be transformed relative to the first view frustum 102, as indicated by the direction of arrow 120, and is therefore sometimes referred to as a transformed view frustum. The first view frustum 102 can have a first projection plane 110, whereas the second view frustum 122 can have a different projection plane 110' that is transformed relative to projection plane 110. This difference in orientation between the two virtual cameras can be referred to as a difference in camera pose, which includes 3D rotation and/or translation relative to a common coordinate system. The term "transformation" can be defined herein as including 3D rotation and/or translation. Such transformation of the view frustum can help mimic the misalignment or divergence between the eyes of such a user so that the user will no longer experience double vision. In the example of FIG. 5, the view frustum of virtual camera 100-2 can be rotated to the right (as indicated by arrow 120) about the Y axis. This is merely illustrative. In general, the pose of either virtual camera 100-1 or 100-2 can be rotated left or right about the Y axis, up or down about the X axis, and/or tilt about the Z axis. Additionally or alternatively, the position of either virtual camera 100-1 or 100-2 can be translated in any direction along the X axis, the Y axis, or the Z axis. If desired, the pose or perspective of both virtual cameras 100-1 and 100-2 can optionally be rotated. Generating virtual content by rotating the POV of one or more of the virtual rendering cameras can help mitigate double vision for a user viewing the virtual content.

The example of FIG. 5 relating to the transformation of the virtual cameras can be employed to correct double vision associated with the *virtual* content generated by the graphics rendering pipeline. Similar transformation in the camera perspective can also be employed to mitigate double vision for the read-world *passthrough* content. As an example, the passthrough content can be transformed using warping or depth reprojection techniques (e.g., using subcomponent 82 in FIG. 3) to generate a view of a scene from a different point of view. As another example (as an alternative to the software only solution described above), device 10 may be provided with adaptive hardware such as camera actuators 150 for physically rotating the left and right cameras 100-1 and 100-2 (assuming cameras 100-1 and 100-2 now represent the front-facing cameras used to capture the passthrough content). For instance, actuators 150 may be configured to allow rotation of two (left and right) individual optical modules around a center that lies between the lens and the sensor of each optical module. Actuators 150 rotate each front-facing camera about the X axis, about the Y axis, and/or about the Z axis. This example where the front-facing cameras are physically rotated using actuators 150 is illustrative. In another embodiment, device 10 can be provided with actuators configured to physically rotate an entire optical module 40 (see, e.g., FIG. 1). For instance, actuators can be employed to transform (e.g., rotate and/or translate) the optical module 40, which can include display 14, lens 30, and other support structures in the optical stack, for one eye or both eyes. Such rotation can be performed along a curved 2D surface (e.g., a surface of a section of a sphere) in accordance with an eye's forward gaze rotation (e.g., about a center of an eyeball).

The embodiments described herein can be employed for different types of displays 14. As an example, the one or more displays 14 in device 10 can be flat (planar) displays. As another example, the one or more displays 14 in device 10 can be curved displays. Such curved displays can include spherical displays (e.g., a display having a surface similar to a section of a sphere or a hemisphere). Such curved displays can optionally be shifted or transformed for further optimization. Content can be presented on only dedicated regions of such curved displays in accordance with the eye's forward gaze (e.g., the field of view can be dynamically adjusted on the curved display). If desired, other components in the optical module, including the lens and any eye tracking sensors can also be rotated in accordance with the eye's forward gaze rotation or movement to exploit the full visible region of the curved display through the lens. In yet other embodiments, sensors 16 in device 10 (see FIG. 2) may optionally include scene cameras and/or other sensors configured to capture a full light field or other information that can be used to improve the modification of the passthrough content.

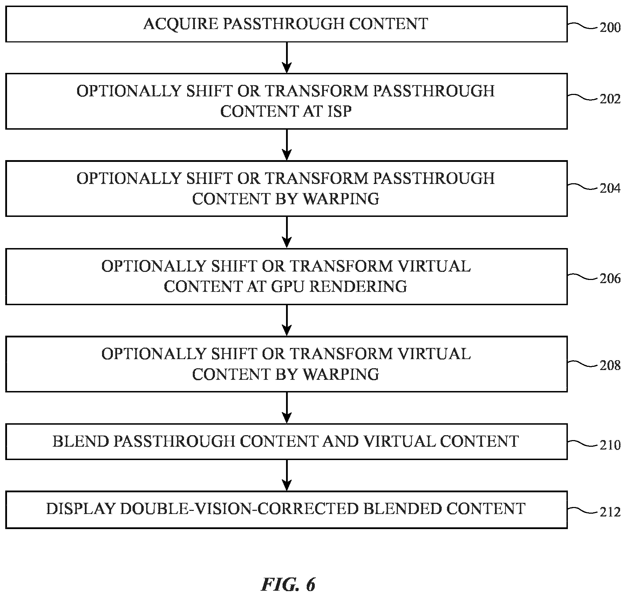

FIG. 6 is a flow chart of illustrative steps for operating electronic device 10 of the type described in connection with FIGS. 1-5. During the operations of block 200, one or more image sensors 50 may acquire passthrough content. For example, one or more front-facing cameras in device 10 can be configured to capture a live passthrough video feed of the physical environment or scene surrounding device 10.

During the operations of block 202, the passthrough content captured by the front-facing cameras can optionally be shifted (e.g., laterally shifted along a projection plane as shown in FIG. 4) or transformed (e.g., about one or more rotational axes as shown in FIG. 5) at the image signal processor 52. In one embodiment, image signal processor 52 can perform the laterally shifting or planar translation of a field of view (FOV) of the passthrough content by selectively cropping the left and/or right passthrough images. In another embodiment, image signal processor 52 can perform the desired rotation of the passthrough content by performing point-of-view correction (POVC). For example, image signal processor 52 can generate a 3D model of the surrounding physical environment around device 10. Based on such 3D model of the physical environment, image signal processor 52 can perform a depth reprojection operation to generate a new view of the current scene from a different point of view or perspective. As another example, image signal processor 52 can be configured to perform a novel view synthesis based on a trained machine learning (ML) model. Given images from a particular view point of the front-facing cameras, such machine learning model can be used to generate images of the same scene from a different point of view. While model based synthesis of new views might need to synthesize, as opposed to reproduce, scene content in areas which are occluded from the perspective of the front-facing cameras, such artifacts are tolerable when weighed against the downside of not being able to use device 10 due to double vision.

Shifting or transforming the passthrough content need not be performed at image signal processor 52. If desired, the shifting or transforming of the passthrough content can alternatively be performed at warping subsystem 80 (see block 204). During the operations of block 204, the passthrough content captured by the front-facing cameras can optionally be shifted (e.g., laterally shifted along a projection plane as shown in FIG. 4) or transformed (e.g., about one or more rotational axes as shown in FIG. 5) at warp block 80. For example, warp block 80 can be configured to selectively warp the left and/or right passthrough images, based on warp meshes generated by block 64, to apply the desired warping, rotation, lateral translation, POV adjustment, distortion correction, morphing, or other modifications to help compensate for double vision. Only one of blocks 202 and 204 need to be performed (e.g., if block 202 is performed, then block 204 can be omitted; if block 204 is performed, then block 202 can be omitted). In yet other embodiments, modification of the passthrough content can be achieved by physically shifting, rotating, or otherwise adjusting the front-facing cameras by the desired amount (e.g., using adaptive actuators 150 shown in FIG. 5).

During the operations of block 206, the *virtual* content generated by graphics rendering engine 72 can optionally be shifted (e.g., laterally shifted along a projection plane as shown in FIG. 4) or rotated (e.g., about one or more rotational axes as shown in FIG. 5). For example, the view frustum limit angles for at least one of the left and right virtual rendering cameras can be modified to mitigate double vision or improve vergence comfort. As another example, the view frustum of at least one of the left and right virtual rendering cameras can be laterally shifted along the projection plane to compensate for double vision or improve vergence comfort. As another example, the pose of at least one of the left and right virtual rendering cameras can be rotated about the X and/or Y axis to compensate for double vision or improve vergence comfort. Any adjustment of the virtual rendering cameras (sometimes referred to herein as "view rendering parameters") can change the location of the projected content on the display, the view frustum, or the perspective from which the virtual content will be rendered.

Shifting or transforming the virtual content need not be performed at graphics rendering engine 72. If desired, the shifting or transforming of the virtual content can alternatively be performed at warping subsystem 80 (see block 208). During the operations of block 208, the virtual content output from graphics renderer 72 can optionally be shifted (e.g., laterally shifted along a projection plane as shown in FIG. 4) or transformed (e.g., about one or more rotational axes as shown in FIG. 5) at warp block 80. For example, warp block 80 can be configured to selectively warp the left and/or right virtual images, based on warp meshes generated by block 64, to apply the desired warping, rotation, lateral translation, POV adjustment, distortion correction, morphing, or other modifications to help compensate for double vision or improve vergence comfort. Only one of blocks 206 and 208 need to be performed (e.g., if block 206 is performed, then block 208 can be omitted; if block 208 is performed, then block 206 can be omitted).

The example of FIG. 6 in which blocks 206 and 208 are shown as occurring after blocks 202 and 204 is merely illustrative. In general, the operations of block 206 or 208 can occur in parallel (simultaneously) with or before the operations of block 200, 202, or 204 (e.g., the generation and adjustment of passthrough content and virtual content can occur in any order).

During the operations of block 210, the adjusted passthrough content and the adjusted virtual content can be blended, merged, or otherwise combined at media merging compositor 90. The adjusted passthrough content may represent the shifted or transformed passthrough content output from block 202 or block 204. The adjusted virtual content may represent the shifted or transformed passthrough content output from block 206 or block 208. If planar view frustum shifting (or cropping) is employed to modify the passthrough content, then a corresponding amount of planar view frustum shifting should be employed to modify the virtual content. Alternatively, if perspective/POV transformation is employed to modify the passthrough content, then a corresponding amount of transformation should be employed to modify the virtual content. Media merging compositor 90 may output the merged content (e.g., by overlaying the modified virtual content on top of the modified passthrough content), which is then presented on one or more display(s) 14 in device 10. Displaying extended reality content in this way can be technically advantageous and beneficial to compensate for or mitigate potential double vision artifacts seen by users with diplopia and/or to improve comfort for users experiencing vergence discomfort.

The operations of FIG. 6 are merely illustrative. In some embodiments, one or more of the described operations may be modified, replaced, or omitted. In some embodiments, one or more of the described operations may be performed in parallel. In some embodiments, additional processes may be added or inserted between the described operations. If desired, the order of certain operations may be reversed or altered and/or the timing of the described operations may be adjusted so that they occur at slightly different times. In some embodiments, the described operations may be distributed in a larger system.

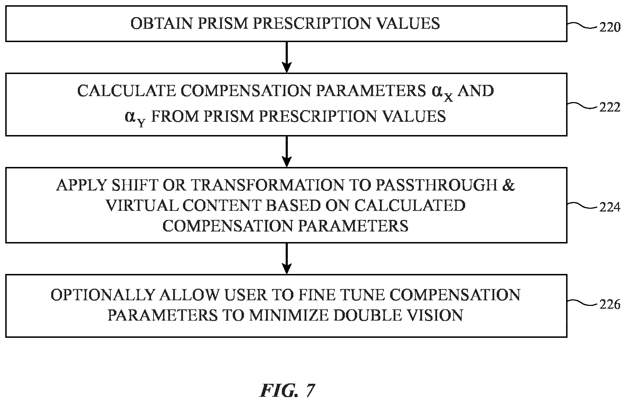

The amount of shifting or transformation being applied to the passthrough and virtual content may be based on one or more double vision compensation parameters. FIG. 7 is a flow chart of illustrative steps for generating double vision compensation parameters from eyeglass prescription values in accordance with some embodiments. During the operations of block 220, device 10 may obtain prescription values from the user. Eyeglass prescription values relating to prism correction, sometimes referred to as "prism prescription values" or "prism correction values," may be given in units of prism diopters. In some embodiments, the prism prescription/correction values may be embedded in an application clip code, a quick response (QR) code, or other scannable codes that the user receive with their prescription lenses from an optometrist. Device 10 can scan such code and automatically read in the prism prescription values without requiring manual entry from the user, which can help minimize human error and facilitate ease of use. For example, a remote server may maintain a database linking prescription lenses to corresponding prism values, and device 10 may communicate with the remote server to obtain the prism values for a prescription lens that otherwise does not provide prism correction.

To help protect the privacy of users, any personal user information that is collected at device 10 may be handled using best practices. These best practices including meeting or exceeding any privacy regulations that are applicable. Opt-in and opt-out options and/or other options may be provided that allow users to control usage of their personal data.

During the operations of block 222, the prism prescription values can then be converted into corresponding compensation parameters α_{X} and α_{Y}. As an example, the prism prescription values (in units of prism diopters) can be proportional to a tangent of the compensation parameters. Compensation parameter α_{X} represents the rotational angle about the X axis (see, e.g., FIG. 5), which indicates an amount of pose rotation up or down and is therefore sometimes referred to as a *vertical* angle of rotation. Compensation parameter α_{Y} represents the rotational angle about the Y axis, which indicates an amount of pose rotation left or right and is therefore sometimes referred to as a *horizontal* angle of rotation. If desired, an additional compensation parameter α_{Z} can optionally be obtained, which represents the amount of pose potation about the Z axis.

During the operations of block 224, device 10 can apply the requisite amount of planar shifting or POV transformation to the passthrough and virtual content based on the compensation parameters computed from block 222. The compensations parameters (e.g., α_{X}, α_{Y}, etc.) can be used to determine the amount of lateral shifting or cropping that is needed to modify the virtual and passthrough content or can be used to determine the amount of transformation that is needed to modify the virtual and passthrough content to mitigate double vision. The mechanisms for performing the desired shifting or transformation are described in connection with FIG. 6 and need not be reiterated in detail to avoid obscuring the present embodiment.

During the operations of block 226, device 10 can optionally allow the user to fine tune the compensation parameters to minimize or further reduce any remaining double vision artifacts. Here, the user can be provided with an opportunity to manually adjust the compensation parameters or the prism prescription values until he/she is satisfied (e.g., until the user's eyes are able to fuse the split vision). For example, the user can be presented with options to adjust the vertical compensation parameter α_{X} and/or the horizontal compensation parameter α_{Y} in steps comparable to those used by an optometrist (e.g., in steps of 0.5 prism diopter, less than 0.5 prism diopter, 0.5-1 prism diopter, less than 1 prism diopter, less than 2 prism diopters, less than 5 prism diopters, etc.). The user can, for example, supply such external input via a keyboard, mouse, trackpad, and/or other input-output devices 24 (see FIG. 2). In general, the compensation parameters can be adjusted or determined based on input or feedback from the user.

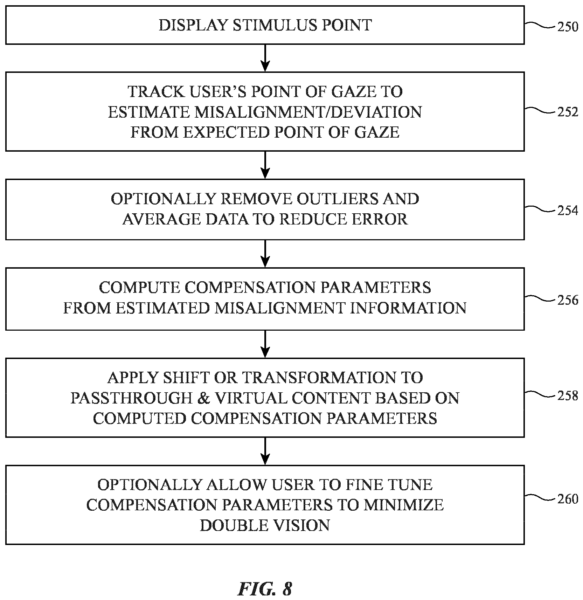

The example of FIG. 7 in which the double vision compensation parameters are computed based on provided prism prescription values is illustrative. FIG. 8 illustrates another embodiment for generating double vision compensation parameters based on measured gaze data. During the operations of block 250, device 10 may display a stimulus point for the user to focus on. During the operations of block 252, device 10 may track or monitor the user's point of gaze to estimate any misalignment or deviation from the expected point of gaze (which should be a function of the location of the stimulus point). Optionally, the user can provide some indication that he/she is focusing and data can be captured at that point in time. Multiple measurements or data samples, sometimes referred to as "gaze data points," can be taken in this way. During the operations of block 254, outliers in the collected data samples can optionally be removed or discarded. The remaining data samples after removal of outlier data points can then optionally be averaged to reduce measurement error.

During the operations of block 256, the estimated misalignment data output from the operations of blocks 252/254 can then be converted into corresponding compensation parameters α_{X} and α_{Y}. Compensation parameter α_{X} represents the rotational angle about the X axis (see, e.g., FIG. 5), which indicates an amount of pose rotation up or down and is therefore sometimes referred to as a *vertical* angle of rotation. Compensation parameter α_{Y} represents the rotational angle about the Y axis, which indicates an amount of pose rotation left or right and is therefore sometimes referred to as a *horizontal* angle of rotation. If desired, an additional compensation parameter α_{Z} can optionally be obtained, which represents the amount of pose rotation about the Z axis. The operations of blocks 250, 252, 254, and 256 can be repeated for the left eye and separately for the right eye.

During the operations of block 258, device 10 can apply the requisite amount of planar shifting or perspective transformation to the passthrough and virtual content based on the compensation parameters computed from block 256. The compensations parameters (e.g., α_{X}, α_{Y}, etc.) can be used to determine the amount of lateral shifting or cropping that is needed to modify the virtual and passthrough content or can be used to determine the amount of transformation that is needed to modify the virtual and passthrough content to mitigate double vision. The mechanisms for perform the desired shifting or transformation are described in connection with FIG. 6 and need not be reiterated in detail to avoid obscuring the present embodiment.

During the operations of block 260, device 10 can optionally allow the user to fine tune the compensation parameters to minimize or further reduce any remaining double vision artifacts. Here, the user can be provided with an opportunity to manually adjust the compensation parameters until he/she is satisfied (e.g., until the user's eyes are able to fuse the split vision). For example, the user can be presented with options to adjust the vertical compensation parameter α_{X} and/or the horizontal compensation parameter α_{Y} in steps comparable to those used by an optometrist (e.g., in steps of 0.5 prism diopter, less than 0.5 prism diopter, 0.5-1 prism diopter, less than 1 prism diopter, less than 2 prism diopters, less than 5 prism diopters, etc.). The user can, for example, supply such external input via a keyboard, mouse, trackpad, and/or other input-output devices 24 (see FIG. 2). In general, the compensation parameters can be adjusted or determined based on input or feedback from the user.

The methods and operations described above in connection with FIGS. 1-8 may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10 (e.g., the storage circuitry within control circuitry 20 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., one or more processors in control circuitry 20). The processing circuitry may include microprocessors, application processors, digital signal processors, central processing units (CPUs), application-specific integrated circuits with processing circuitry, or other processing circuitry.

Many different types of electronic systems can enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers.

In accordance with an embodiment, a method of operating an electronic device is provided that includes with one or more image sensors, acquiring passthrough content, with a graphics rendering subsystem, generating virtual content, mitigating double vision or improving vergence comfort by modifying at least the passthrough content to produce corresponding modified passthrough content, merging the modified passthrough content with the virtual content to produce corresponding merged content, and with one or more displays, presenting the merged content.

In accordance with another embodiment, the passthrough content optionally includes left eye content and right eye content, and modifying the passthrough content optionally includes cropping, at an image signal processor, a selected one of the left eye content and the right eye content to mitigate double vision or improve vergence comfort.

In accordance with another embodiment, the passthrough content optionally includes left eye content and right eye content, and modifying the passthrough content optionally includes transforming, at an image signal processor, a selected one of the left eye content and the right eye content to mitigate double vision or improve vergence comfort.

In accordance with another embodiment, the passthrough content optionally includes left eye content and right eye content, and modifying the passthrough content optionally includes selectively warping at least one of the left eye content and the right eye content to apply a lateral shift in a field of view of the at least one of the left eye content and the right eye content.

In accordance with another embodiment, the passthrough content optionally includes left eye content and right eye content, and modifying the passthrough content optionally includes selectively warping at least one of the left eye content and the right eye content to apply a transformation in a point of view of the at least one of the left eye content and the right eye content.

In accordance with another embodiment, the virtual content optionally includes left eye content and right eye content, and the graphics rendering subsystem is optionally configured to generate the virtual content based on a first virtual camera that imposes constraints defining a first point of view from which the left eye content is being rendered at the graphics rendering subsystem and a second virtual camera that imposes constraints defining a second point of view from which the right eye content is being rendered at the graphics rendering subsystem.

In accordance with another embodiment, the first virtual camera optionally has a first view frustum and the second virtual camera optionally has a second view frustum, the method optionally includes shifting, with the graphics rendering subsystem, a selected one of the left eye content and the right eye content on the one or more displays to mitigate double vision or improve vergence comfort by adjusting an angle limit for a corresponding one of the first view frustum and the second view frustum.

In accordance with another embodiment, the first virtual camera optionally has a first view frustum and the second virtual camera optionally has a second view frustum, the method optionally includes laterally shifting, with the graphics rendering subsystem, a selected one of the first view frustum and the second view frustum along a common projection plane to mitigate double vision or improve vergence comfort.

In accordance with another embodiment, the method optionally includes transforming, with the graphics rendering subsystem, a selected one of the first virtual camera, and the second virtual camera to mitigate double vision or improve vergence comfort.

In accordance with another embodiment, the virtual content optionally includes left eye content and right eye content, the method optionally includes modifying the virtual content by selectively warping at least one of the left eye content and the right eye content to apply a lateral shift in a field of view of the at least one of the left eye content and the right eye content.

In accordance with another embodiment, the virtual content optionally includes left eye content and right eye content, the method optionally includes modifying the virtual content optionally by selectively warping at least one of the left eye content and the right eye content to apply a transformation in a point of view of the at least one of the left eye content and the right eye content.

In accordance with another embodiment, the method optionally includes obtaining gaze data with one or more tracking sensors, generating warp meshes based on the gaze data, where modifying the passthrough content optionally includes modifying the passthrough content based on the warp meshes to mitigate double vision or improve vergence comfort, and modifying the virtual content based on the warp meshes to mitigate double vision or improve vergence comfort.

In accordance with an embodiment, a method of operating an electronic device is provided that includes: with one or more image sensors, acquiring passthrough content; with a graphics rendering subsystem, generating virtual content; obtaining prism prescription values for correcting double vision or improving vergence comfort; computing compensation parameters based on the prism prescription values; modifying the passthrough content based on the compensation parameters; and displaying a blended version of the modified passthrough content and the virtual content.

In accordance with another embodiment, the passthrough content optionally includes left eye content and right eye content, and modifying the passthrough content optionally includes shifting or transforming one or more of the left eye content and the right eye content to mitigate double vision or improve vergence comfort.

In accordance with another embodiment, the method optionally includes modifying the virtual content based on the compensation parameters, where the virtual content includes left eye content and right eye content and where modifying the virtual content optionally includes shifting or transforming one or more of the left eye content and the right eye content to mitigate double vision or improve vergence comfort.

In accordance with another embodiment, the method optionally includes providing a user with an opportunity to adjust the compensation parameters to minimize double vision or improve vergence comfort.

In accordance with another embodiment, the method optionally includes reading a scannable code, and obtaining the prism prescription values from the scannable code.

In accordance with an embodiment, a method of operating an electronic device is provided that includes: with one or more image sensors, acquiring passthrough content; with a graphics rendering subsystem; generating virtual content; displaying a stimulus point; while the stimulus point is being displayed, monitoring a point of gaze to estimate a misalignment between the point of gaze and an expected point of gaze; computing compensation parameters based on the estimated misalignment; modifying the passthrough content based on the compensation parameters; and displaying a blended version of the modified passthrough content and the virtual content.

In accordance with another embodiment, the passthrough content optionally includes left eye content and right eye content, and modifying the passthrough content optionally includes shifting or transforming one or more of the left eye content and the right eye content to mitigate double vision or improve vergence comfort.

In accordance with another embodiment, the method optionally includes modifying the virtual content based on the compensation parameters, where the virtual content includes left eye content and right eye content and where modifying the virtual content optionally includes shifting or transforming one or more of the left eye content and the right eye content to mitigate double vision or improve vergence comfort.

In accordance with another embodiment, the method optionally includes providing a user with an opportunity to adjust the compensation parameters to minimize double vision.

In accordance with another embodiment, the method includes estimating the misalignment by obtaining a plurality of gaze data points, removing one or more outliers from the plurality of gaze data points, and averaging the plurality of gaze data points.

In accordance with an embodiment, a method of operating an electronic device is provided that includes: with a graphics rendering subsystem, generating virtual content having left eye content and right eye content, the graphics rendering subsystem being configured to generate the virtual content based on a first virtual camera that imposes constraints defining a first point of view from which the left eye content is being rendered at the graphics rendering subsystem and a second virtual camera that imposes constraints defining a second point of view from which the right eye content is being rendered at the graphics rendering subsystem; mitigating double vision or improving vergence comfort by modifying a selected one of the left eye content and the right eye content to produce modified virtual content; and with one or more displays, outputting the modified content.

In accordance with another embodiment, modifying the selected one of the left eye content and the right eye content optionally includes shifting the left eye content or the right eye content on the one or more displays.

In accordance with another embodiment, modifying the selected one of the left eye content and the right eye content optionally includes transforming the first virtual camera or the second virtual camera.

In accordance with another embodiment, modifying the selected one of the left eye content and the right eye content optionally includes warping the left eye content or the right eye content to apply a lateral shift.

In accordance with another embodiment, modifying the selected one of the left eye content and the right eye content optionally includes warping the left eye content or the right eye content to apply a perspective transformation.

The foregoing is merely illustrative and various modifications can be made to the described embodiments. The foregoing embodiments may be implemented individually or in any combination.

## Claims

1. A method of operating an electronic device, comprising:
with one or more image sensors, acquiring passthrough content;
with a graphics rendering subsystem, generating virtual content;
mitigating double vision or improving vergence comfort by modifying at least the passthrough content to produce corresponding modified passthrough content;
merging the modified passthrough content with the virtual content to produce corresponding merged content; and
with one or more displays, presenting the merged content.

2. The method of claim 1, wherein:
the passthrough content comprises left eye content and right eye content; and
modifying the passthrough content comprises cropping, at an image signal processor, a selected one of the left eye content and the right eye content to mitigate double vision or improve vergence comfort.

3. The method of claim 1, wherein:
the passthrough content comprises left eye content and right eye content; and
modifying the passthrough content comprises transforming, at an image signal processor, a selected one of the left eye content and the right eye content to mitigate double vision or improve vergence comfort.

4. The method of claim 1, wherein:
the passthrough content comprises left eye content and right eye content; and
modifying the passthrough content comprises selectively warping at least one of the left eye content and the right eye content to apply a lateral shift in a field of view of the at least one of the left eye content and the right eye content.

5. The method of claim 1, wherein:
the passthrough content comprises left eye content and right eye content; and
modifying the passthrough content comprises selectively warping at least one of the left eye content and the right eye content to apply a transformation in a point of view of the at least one of the left eye content and the right eye content.

6. The method of claim 1, wherein:
the virtual content comprises left eye content and right eye content; and
the graphics rendering subsystem is configured to generate the virtual content based on a first virtual camera that imposes constraints defining a first point of view from which the left eye content is being rendered at the graphics rendering subsystem and a second virtual camera that imposes constraints defining a second point of view from which the right eye content is being rendered at the graphics rendering subsystem.

7. The method of claim 6, wherein the first virtual camera has a first view frustum and wherein the second virtual camera has a second view frustum, the method further comprising:
with the graphics rendering subsystem, shifting a selected one of the left eye content and the right eye content on the one or more displays to mitigate double vision or improve vergence comfort by adjusting an angle limit for a corresponding one of the first view frustum and the second view frustum.

8. The method of claim 6, wherein the first virtual camera has a first view frustum and wherein the second virtual camera has a second view frustum, the method further comprising:
with the graphics rendering subsystem, laterally shifting a selected one of the first view frustum and the second view frustum along a common projection plane to mitigate double vision or improve vergence comfort.

9. The method of claim 6, further comprising:
with the graphics rendering subsystem, transforming a selected one of the first virtual camera and the second virtual camera to mitigate double vision or improve vergence comfort.

10. The method of claim 6, wherein the virtual content comprises left eye content and right eye content, the method further comprising:
modifying the virtual content by selectively warping at least one of the left eye content and the right eye content to apply a lateral shift in a field of view of the at least one of the left eye content and the right eye content.

11. The method of claim 1, wherein the virtual content comprises left eye content and right eye content, the method further comprising:
modifying the virtual content by selectively warping at least one of the left eye content and the right eye content to apply a transformation in a point of view of the at least one of the left eye content and the right eye content.

12. The method of claim 1, further comprising:
with one or more tracking sensors, obtaining gaze data;
generating warp meshes based on the gaze data, wherein modifying the passthrough content comprises modifying the passthrough content based on the warp meshes to mitigate double vision or improve vergence comfort; and
modifying the virtual content based on the warp meshes to mitigate double vision or improve vergence comfort.

13. The method of claim 1, further comprising
obtaining prism prescription values for correcting double vision or improving vergence comfort;
computing compensation parameters based on the prism prescription values; and
modifying the passthrough content based on the compensation parameters.

14. The method of claim 1, further comprising:
displaying a stimulus point;
while the stimulus point is being displayed, monitoring a point of gaze to estimate a misalignment between the point of gaze and an expected point of gaze;
computing compensation parameters based on the estimated misalignment; and
modifying the passthrough content based on the compensation parameters.

15. The method of claim 1, wherein the virtual content comprises left eye content and right eye content, and wherein the graphics rendering subsystem is configured to generate the virtual content based on a first virtual camera that imposes constraints defining a first point of view from which the left eye content is being rendered at the graphics rendering subsystem and a second virtual camera that imposes constraints defining a second point of view from which the right eye content is being rendered at the graphics rendering subsystem, the method further comprising:
modifying the virtual content to mitigate double vision or improving vergence comfort by modifying a selected one of the left eye content and the right eye content.
